# EUROPEAN PATENT SPECIFICATION

(11) **EP 1 354 923 B1**
(45) Date of publication and mention of the grant of the patent: **21.05.2008**
(21) Application number: 03008285.3
(22) Date of filing: 09.04.2003
(51) Int. Cl.: C09D 163/00, C09D 151/06, C09D 151/00

(54) **Aqueous primer coating composition, process for formation of coating film using said composition, and coated article**
Wässrige Grundierung, Prozess zur Herstellung einer Beschichtung mit dieser Grundierung und beschichteter Gegenstand
Composition de revêtement primaire, procédé de formation d'un film de revêtement utilisant cette composition et l'article revêtu

(30) Priority: 15.04.2002 JP 2002112731
(43) Date of publication of application: 22.10.2003
(73) Proprietor: Nippon Bee Chemical Co., Ltd., Osaka 573-1153 (JP); HONDA GIKEN KOGYO KABUSHIKI KAISHA, Minato-ku, Tokyo 107-0062 (JP)
(72) Inventor: Nakaoka, Ryoichi, c/o Nippon Bee Chemical Co. Ltd., Hirakata-shi, Osaka 573-1153 (JP); Nakagawa, Takeshi, c/o Nippon Bee Chemical Co.Ltd., Hirakata-shi, Osaka 573-1153 (JP); Kawasaki, Yutaro, c/o Nippon Bee Chemical Co.Ltd., Hirakata-shi, Osaka 573-1153 (JP); Mizuguchi, Katsumi, c/o Nippon Bee Chemical Co.Ltd, Hirakata-shi, Osaka 573-1153 (JP); Ogawa, Takeshi, c/o K. K. Honda Gijutsu Kenkyusho, Waka-shi, Saitama 351-0113 (JP); Yamamoto, Takashi, K. K. Honda Gijutsu Kenkyusho, Waka-shi, Saitama 351-0113 (JP); Igarashi, Kazuo, c/o K. K. Honda Gijutsu Kenkyusho, Waka-shi, Saitama 351-0113 (JP)
(74) Representative: Henkel, Feiler & Hänzel

(56) References cited:
- EP-A- 0 466 136
- US-A- 5 767 188
- US-B1- 6 344 500

## Description

### BACKGROUND OF THE INVENTION

### A. TECHNICAL FIELD

The present invention relates to: an aqueous primer coating composition, which displays excellent performance for plastic materials such as polypropylene resins; a process for formation of a coating film using this composition; and a coated article.

### B. BACKGROUND ART

Plastic materials used for such as automobile bumpers and molds generally have bad paint wettability, and are inferior in coatability. Particularly, in the case where the plastic materials are such as polypropylene resins, these resins are chemically inactive, and therefore the coatability and the adhesion of overcoating paints are extremely bad. Accordingly, a method which involves coating a primer before coating a paint is often adopted in order to ensure the adhesion between the material and the paint, and various solvent-based primers and aqueous primers are proposed.

In recent years, the development of the aqueous primers has been carried out extensively. However, the aqueous primers have generally had a demerit of being inferior to the solvent-based primers in the coatability and the adhesion. Therefore, research and development have variously been carried out in order to obtain aqueous primers that are excellent in the coatability and the adhesion.

For such as enhancing the adhesion sufficiently, there is disclosed a primer including a modified chlorinated polyolefin as obtained by modifying a chlorinated polyolefin with an unsaturated polycarboxylic acid and/or an acid anhydride (e.g. JP-A-182534/1991). However, the modification with the unsaturated polycarboxylic acid and/or the acid anhydride having high water solubility has had a demerit of deteriorating the humidity-resisting adhesion.

On the other hand, it is disclosed that various performance as the aqueous primer can be enhanced by combining the modified chlorinated polyolefin with such as various other resins and using them together. For the purpose of enhancing the paint stability and the performance of coating films, JP-A-072337/1992, for example, discloses an aqueous primer including a modified chlorinated polyolefin, and besides, a urethane resin and an epoxy resin. However, the gasohol resistance has not been sufficient in this case. In addition, Japanese Patent No. 3203881 discloses an aqueous primer including a chlorinated polyolefin, and besides, an aqueous acrylic resin and a urethane resin, but the humidity-resisting adhesion and the gasohol resistance have not been sufficient.

The present applicants have already developed an aqueous primer including a modified chlorinated polyolefin emulsion as obtained by carrying out modification with an acid anhydride, and besides, an aqueous alkyd resin and an aqueous novolac epoxy resin (JP-A-324690/2001). As to this aqueous primer, both the humidity-resisting adhesion and the gasohol resistance have been improved. However, in recent years, for the following reasons, it is desired to develop an aqueous primer having more excellent humidity-resisting adhesion and gasohol resistance.

In hitherto coating an aqueous primer, a primer coating film as obtained is baking-treated after the coating of the aqueous primer, and subsequently a base paint and a clear paint to be overcoating paints are coated, and thereafter the resultant base-paint coating film and clear-paint coating film are baking-treated. In recent years, in view of further enhancing the productivity by shortening the coating steps and reducing the energy as used, there is considered a method that involves omitting the baking treatment of the aqueous primer coating film to thereby decrease the baking treatment to once, namely, a method that involves overcoating the aqueous primer, the base paint, and the clear paint and then carrying out the baking treatment of the resultant three-layered coating film at the same time. However, any coating film as obtained by applying the above aqueous primer to this method has a demerit such that the coating film performance such as the adhesion, the humidity-resisting adhesion, and the gasohol resistance is insufficient, and therefore its improvement is desired.

### SUMMARY OF THE INVENTION

### A. OBJECT OF THE INVENTION

An object of the present invention is to provide: an aqueous primer coating composition, which can form a coating film excellent in the humidity-resisting adhesion and the gasohol resistance particularly even in the case of overcoating the aqueous primer, the base paint, and the clear paint and then carrying out the baking treatment of the resultant three-layered coating film at the same time, and which can therefore enhance the productivity in the coating steps; a process for formation of a coating film using this composition; and a coated article.

### B. DISCLOSURE OF THE INVENTION

While, in order to solve the above-mentioned problems, the present inventors were studying various catalysts for promoting a reaction between a carboxyl group of an acid-anhydride-modified chlorinated polyolefin emulsion resin and an epoxy group of an aqueous epoxy resin, they have used an organic strong base (or its salt) and thereby succeeded in: enhancing the adhesion (which is a fundamental coating-film property); and 1) enhancing the gasohol resistance; and further, 2) forming the coating film excellent in the coating-film properties such as the humidity-resisting adhesion and the gasohol resistance even if the baking treatment of the three-layered coating film as obtained by overcoating the aqueous primer coating composition, the base paint, and the clear paint is carried out at the same time. Accordingly, they have confirmed that: there can be omitted the baking treatment of the primer coating film which has hitherto been carried out before overcoating the base paint and the clear paint; and therefore the coating film having excellent coating-film properties can be formed with high productivity. Furthermore, they have obtained the knowledge that the humidity-resisting adhesion is enhanced by further combining an aqueous urethane dispersion. Then, the present invention has been completed by determining the combining ratio of these components in view of the balance between the properties and the storage stability of the coating film as obtained.

That is to say, an aqueous primer coating composition, according to the present invention, comprises an acid-anhydride-modified chlorinated polyolefin emulsion resin (A), an aqueous urethane dispersion (B), an aqueous epoxy resin (C), and an organic strong base and/or its salt (D); wherein: relative to the total nonvolatile content of the (A), (B), and (C), the nonvolatile content of the (A) is in the range of 20 to 60 weight %, that of the (B) is in the range of 10 to 40 weight %, and that of the (C) is in the range of 20 to 60 weight %, and further, the (D) is in the range of 1 to 5 weight %.

A process for formation of a coating film, according to the present invention, is a process comprising the steps of: coating a substrate with the above aqueous primer coating composition; and thereafter drying the resultant primer coating film in such a manner that its nonvolatile content will not be less than 60 weight %; and thereafter overcoating the primer coating film with a base paint and a clear paint; and thereafter baking the resultant three-layered coating film onto the substrate.

In addition, a coated article, according to the present invention, is a coated article obtained by coating the substrate by the above process for formation of a coating film.

These and other objects and the advantages of the present invention will be more fully apparent from the following detailed disclosure.

### DETAILED DESCRIPTION OF THE INVENTION

### -Aqueous primer coating composition-

The present invention aqueous primer coating composition is an aqueous primer coating composition comprising the acid-anhydride-modified chlorinated polyolefin emulsion resin (A), the aqueous urethane dispersion (B), the aqueous epoxy resin (C), and the organic strong base and/or its salt (D). Hereinafter, each component as included in this aqueous primer coating composition is explained.

### (Acid-anhydride-modified chlorinated polyolefin):

The acid-anhydride-modified chlorinated polyolefin in the emulsion resin (A) as used in the present invention is a polyolefin derivative comprising a chlorinated polyolefin moiety and an acid anhydride moiety as bonded to this chlorinated polyolefin moiety.

The chlorinated polyolefin moiety is a moiety including a polyolefin having a substituent chlorine atom. In addition, the acid anhydride moiety, for example, includes a group as derived from an acid anhydride, such as maleic anhydride, citraconic anhydride, and itaconic anhydride, and is a modified moiety as obtained by grafting. The acid anhydride moiety may be a moiety including a group as derived from at least one acid anhydride.

The acid-anhydride-modified chlorinated polyolefin is a polyolefin as internally modified by carrying out a reaction of a polyolefin with an acid anhydride and chlorine, and it is, for example, produced by allowing the chlorine and the acid anhydride to react with the polyolefin. Hereupon, either of the chlorine and the acid anhydride may be allowed to react with the polyolefin earlier than the other. The reaction with the chlorine is, for example, carried out by introducing a chlorine gas into a solution including the polyolefin. In addition, the reaction with the acid anhydride is, for example, carried out by allowing the polyolefin (or chlorinated polyolefin) to react with the acid anhydride in the presence of a peroxide.

Examples of the aforementioned polyolefin include: polyethylene; polypropylene; polybutene; copolymers, such as ethylene-propylene copolymers, ethylene-propylene-diene copolymers, and styrene-butadiene-isoprene copolymers; and polymers as obtained by polymerizing at least one monomer selected from the group consisting of ethylene, propylene, and alkenes having not more than 8 carbon atoms. These may be used either alone respectively or in combinations with each other. Of the above, the use of the polypropylene is favorable from the viewpoint such that: it is easily available and enhances the adhesion. In addition, examples of the acid anhydride as used for the aforementioned modification include maleic anhydride, citraconic anhydride, and itaconic anhydride.

The acid-anhydride-modified chlorinated polyolefin favorably has a chlorine content of 10 to 30 weight %, more favorably 18 to 22 weight %. In the case where the chlorine content is less than 10 weight %, there is a tendency such that: the solvent solubility is lowered, and the emulsification is difficult to carry out. On the other hand, in the case where the chlorine content is more than 30 weight %, there is a tendency such that: the adhesion to plastic materials such as the polypropylene is deteriorated, and the gasohol resistance is also deteriorated.

The acid-anhydride-modified chlorinated polyolefin favorably has an acid anhydride content of 0.5 to 10 weight %, more favorably 1 to 7 weight %. In the case where the acid anhydride content is less than 0.5 weight %, there is a tendency such that: the emulsifying ability is deteriorated, and the gasohol resistance is also deteriorated. On the other hand, in the case where the acid anhydride content is more than 10 weight %, there is a tendency such that: the amount of the acid anhydride group is too large, and the humidity-resisting adhesion is deteriorated.

The acid-anhydride-modified chlorinated polyolefin favorably has a weight-average molecular weight of 20,000 to 200,000, more favorably 30,000 to 120,000. In the case where the weight-average molecular weight is smaller than 20,000, there is a tendency such that: the strength of the primer coating film as obtained from this aqueous primer coating composition is lowered, and the adhesion is also deteriorated. On the other hand, in the case where the weight-average molecular weight is larger than 200,000, there is a tendency such that: the viscosity becomes high, and the emulsification is difficult to carry out.

### (Emulsion resin (A)):

The acid-anhydride-modified chlorinated polyolefin has so high hydrophobicity as to be difficult to stably disperse into water. Thus, in the present invention, the acid-anhydride-modified chlorinated polyolefin is emulsified with an emulsifier and a neutralizer and the resultant emulsion is used as the emulsion resin (A).

The combining ratio of the emulsifier is fitly set in accordance with the combining ratio of the acid-anhydride-modified chlorinated polyolefin, the neutralizer, or water, but it is, for example, favorably in the range of 5 to 50 weight %, more favorably 10 to 30 weight %, per 100 weight % of the acid-anhydride-modified chlorinated polyolefin. In the case where the ratio of the emulsifier is less than 5 weight %, there is a tendency such that: the storage stability of the emulsion is deteriorated, and further the aggregation or precipitation easily occurs on the way of polymerization in the below-mentioned production process for the emulsion. On the other hand, in the case where the ratio of the emulsifier is more than 50 weight %, there is a tendency such that: a large amount of emulsifier remains in the coating film, and the humidity-resisting adhesion and the weather resistance of the coating film are deteriorated.

There is no especial limitation on the emulsifier, but examples thereof include: nonionic emulsifiers, such as polyoxyethylene alkyl ethers (e.g. polyoxyethylene lauryl ether and polyoxyethylene stearyl ether), polyoxyethylene alkyl phenol ethers (e.g. polyoxyethylene nonyl phenol ether), polyoxyethylene aliphatic esters, polyoxyethylene polyhydric alcohol fatty acid esters, polyhydric alcohol fatty acid esters, polyoxyethylene propylene polyols, and alkylolamides; anionic emulsifiers, such as alkyl sulfate ester salts, dialkylsulfosuccinate salts, alkylsulfonate salts, polyoxyethylene stearyl ether sulfate salts, polyoxyethylene nonyl phenyl ether sulfate salts, and alkyl phosphate salts; amphoteric emulsifiers, such as alkyl betaines (e.g. stearyl betaine and lauryl betaine) and alkylimidazolines; resin type emulsifiers, such as polyoxyethylene-group-containing urethane resins and carboxylate-salt-group-containing urethane resins; and cationic emulsifiers, such as imidazoline laurate, lauryltrimethylammonium chloride, stearyl betaine, and distearyldimethylammonium chloride. These may be used either alone respectively or in combinations with each other. Among these, the nonionic emulsifiers are favorable, because they have no ionic polar group of high hydrophilicity and therefore make the humidity-resisting adhesion of the coating film good.

The combining ratio of the neutralizer is also set in accordance with the combining ratio of the acid-anhydride-modified chlorinated polyolefin, the emulsifier, or water. Particularly, the neutralizer is combined in consideration of sufficiently neutralizing an acidic functional group (e.g. acid anhydride group and carboxyl group) as contained in such as the acid-anhydride-modified chlorinated polyolefin and the emulsifier, but the combining ratio is, for example, favorably in the range of 0.2 to 10 equivalents, more favorably 0.5 to 4 equivalents, relative to 1 equivalent of the acidic functional group as contained in the acid-anhydride-modified chlorinated polyolefin. In the case where the combining ratio is less than 0.2 equivalent, there is a tendency such that: the emulsification is not sufficient. In the case where the combining ratio is more than 10 equivalents, there is a tendency such that: such as the residual neutralizer deteriorates the humidity-resisting adhesion or promotes the dechlorination. The pH of the emulsion, which is determined by combining the neutralizer, is favorably in the range of 7 to 11, more favorably 7.5 to 10.5, most favorably 8 to 10. In the case where the pH of the emulsion is less than 7, the neutralization is not sufficient, and therefore there is a tendency such that the storage stability of the emulsion is deteriorated. On the other hand, in the case where the pH of the emulsion is more than 11, an excess of free neutralizer exists in the emulsion, and therefore there is a tendency such that: the emulsion has a strong smell of the neutralizer, or the humidity resistance of the coating film is deteriorated.

The neutralizer, as used in the present invention, adds to the acid anhydride group and/or carboxyl group of the chlorinated polyolefin resin and/or neutralizes these groups, thereby serving to enhance the hydrophilicity of the modified chlorinated polyolefin to thus improve the storage stability of the emulsion.

The neutralizer includes the below-mentioned organic strong base as an essential component, and may further include conventional organic amines and ammonia when the occasion demands.

Examples of the conventional organic amines include: monoamines, such as trimethylamine, triethylamine, butylamine, dibutylamine and N-methylmorpholine; polyamines, such as ethylenediamine, hexamethylenediamine, piperazine, isophoronediamine, triethylenediamine and diethylenetriamine; and alkanolamines, such as monoethanolamine, diethanolamine, triethanolamine, N-methyldiethanolamine, N,N-dimethylethanolamine and 2-amino-2-methylpropanol.

The combining ratio of the water is favorably in the range of 50 to 95 weight %, more favorably 60 to 85 weight %, most favorably 65 to 80 weight %, of the entirety of the emulsion. In the case where the combining ratio of the water is less than 50 weight %, the nonvolatile content in the emulsion is too much, and therefore there is a tendency such that: the storage stability of the emulsion is deteriorated due to easy occurrence of such as aggregation. On the other hand, in the case where the combining ratio of the water is more than 95 weight %, the production efficiency is lowered in the below-mentioned production process for the emulsion, and further, when the emulsion is used for the aqueous primer coating composition, there is a tendency such that: its nonvolatile content is decreased, and the coating workability is deteriorated.

Though not especially limited, the average particle diameter of polymer particles, including the acid-anhydride-modified chlorinated polyolefin in a major proportion, in the emulsion is favorably in the range of 0.01 to 10 µm, more favorably 0.03 to 5 µm, most favorably 0.05 to 1 µm. In the case where the average particle diameter of the polymer particles is smaller than 0.01 µm, a large quantity of emulsifier is necessary, and therefore there is a tendency such that the water resistance and the weather resistance of the coating film are deteriorated. On the other hand, in the case where the average particle diameter of the polymer particles is larger than 10 µm, the storage stability of the emulsion is deteriorated, and further the volume of the polymer particles is too large, and therefore there is a tendency such that much melting heat and time to form a coating film is necessary. Furthermore, there is a tendency such that: such as the appearance, the humidity-resisting adhesion, and solvent resistance of the coating film as obtained are sometimes deteriorated.

The emulsification method for the acid-anhydride-modified chlorinated polyolefin may be a publicly known method. Examples thereof include: a method that involves heating the acid-anhydride-modified chlorinated polyolefin, the emulsifier, and the neutralizer (with a solvent used if necessary) or dissolving them as they are, and then emulsifying the resultant mixture in water with a commercially available emulsifying machine; or a method that involves heating the acid-anhydride-modified chlorinated polyolefin and the emulsifier (with a solvent used if necessary) or dissolving them as they are, and then emulsifying the resultant mixture in water (containing the neutralizer as an additive) with a commercially available emulsifying machine. In addition, or otherwise, the emulsification method may be: a method that involves slowly adding water to an organic phase under stirred conditions, thereby carrying out reversed-phase emulsification, wherein the organic phase is obtained by heating the acid-anhydride-modified chlorinated polyolefin, the emulsifier, and the neutralizer (with a solvent used if necessary) or dissolving them as they are; or a method that involves slowly adding water (containing the neutralizer as an additive) to an organic phase under stirred conditions, thereby carrying out reversed-phase emulsification, wherein the organic phase is obtained by heating the acid-anhydride-modified chlorinated polyolefin and the emulsifier (with a solvent used if necessary) or dissolving them as they are.

Examples of the above solvent as used in the above emulsification methods include: aromatic solvents, such as xylene, toluene, and Solveso-100 (produced by Exxon Corporation); and ethylene glycol or propylene glycol solvents, such as diethylene glycol monoethyl ether acetate, butyl cellosolve, propylene glycol monomethyl ether, dipropylene glycol monomethyl ether, and propylene glycol n-propyl ether.

### (Aqueous urethane dispersion (B)):

The aqueous urethane dispersion (B) as used in the present invention is a component for enhancing the humidity-resisting adhesion of the coating film, and it is, for example, a dispersion as obtained by forcibly emulsifying or self-emulsifying a prepolymer while dispersing it into water in the presence of an emulsifier, wherein the prepolymer is obtained by beforehand making a reaction between a diol and a diisocyanate.

The aqueous urethane dispersion (B) may include such as dimethylolbutanoic acid having a carboxyl group in order to enhance the dispersibility. In this case, as to a neutralizer as used for producing the aqueous urethane dispersion (B), there can be used the below-mentioned organic strong base and/or a conventional organic amine or ammonia.

Examples of the aqueous urethane dispersion (B) on the market as used in the present invention include: Takelac XSW75X35 produced by Mitsui-Takeda Chemical Co., Ltd.; TPA176 produced by Arakawa Chemical Industries, Ltd.; VTW6462 produced by SOLUTIA Co., Ltd.; NeoRez R9649 and R966 produced by Avecia Co., Ltd.; and Superflex 150 and Superflex 110 produced by Dai-ichi Kogyo Seiyaku Co., Ltd.

### (Aqueous epoxy resin (C)):

Usable as the aqueous epoxy resin (C) is an aqueous resin having at least one epoxy group in its molecule which is publicly known in the corresponding technical field. Examples thereof include: Deconal EM150 produced by Nagase Chemtex Co., Ltd., EPI-REZ 6006W70 and 5003W55 produced by Japan Epoxy Resin Co., Ltd., and WEX-5100 produced by Toto Kasei Co., Ltd., which are obtained by forcibly emulsifying a novolac type epoxy resin with an emulsifier, wherein the novolac type epoxy resin is obtained by carrying out an addition reaction of epichlorohydrin to a phenol novolac resin; and Deconal EM101 and EM103 produced by Nagase Chemtex Co., Ltd., and EPI-REZ 3510W60, 3515W6, 3522W60, and 3540WY55 produced by Japan Epoxy Resin Co., Ltd., which are obtained by forcibly emulsifying a bisphenol type epoxy resin with an emulsifier, wherein the bisphenol type epoxy resin is obtained by similarly carrying out an addition reaction of epichlorohydrin to bisphenol; and further, Deconal EX-611, EX-614, EX-411, and EX-313 produced by Nagase Chemtex Co., Ltd., as alkyl-type epoxy resins as obtained by carrying out an addition reaction of epichlorohydrin to a polyol (e.g. sorbitol, pentaerythritol, and glycerin).

### (Organic strong base and/or its salt (D)):

The organic strong base and/or its salt (D) as used in the present invention is a component for enhancing the gasohol resistance. In addition, the use of the organic strong base and/or its salt (D) enables formation of the coating film excellent in the coating-film properties such as the humidity-resisting adhesion and the gasohol resistance, even if the baking treatment of the three-layered coating film as obtained by overcoating the present invention aqueous primer coating composition, the base paint, and the clear paint is carried out at the same time. Accordingly, there can be omitted the baking treatment of the primer coating film which has hitherto been carried out before overcoating the base paint and the clear paint, and therefore the productivity is enhanced by leaps and bounds in the coating steps.

In the present invention, either of the organic strong base and its salt may be added. When the organic strong base is, as it is, added to be used as the below-mentioned pH-adjusting agent, the pH of the aqueous primer coating composition rises. On the other hand, in the case of not desiring the rise of the pH, it is proper to add the salt of the organic strong base instead of the organic strong base. Even if the salt of the organic strong base is added, the baking treatment of the above three-layered coating film can be carried out at the same time, and there can be obtained the coating film excellent in the coating-film properties such as the humidity-resisting adhesion and the gasohol resistance.

The organic strong base favorably has a pKa of not less than 11. Examples of the organic strong base include: amines, such as 1,8-diazabicyclo[5.4.0]undecene-7 (DBU), 1,5-diazabicyclo[4.3.0]nonene-5 (DBN), piperazine, piperidine, and tetramethylguanidine; and tetraalkylammonium hydroxides, such as tetramethylammonium hydroxide, tetraethylammonium hydroxide, and tetrapropylammonium hydroxide. Among these organic strong bases, the DBU or the DBN is favorable, and can form the coating film excellent in the gasohol resistance.

The salt of the organic strong base is generally obtained by neutralizing the above organic strong base with an organic acid or an inorganic acid. Examples of the salt of the organic strong base include: a phenolate salt, an octanoate salt, and a hydrochloride of the DBU; and tetraethylammonium acetate and tetrapropylammonium chloride.

Incidentally, in the present invention, the organic strong base can be used as the above-explained neutralizer of the emulsion resin and as the below-mentioned pH-adjusting agent of the aqueous primer coating composition. In addition, if the organic strong base is beforehand used as the neutralizer of the emulsion resin, there is an advantage of enhancing the gasohol resistance.

### (Other components):

As to the present invention aqueous primer coating composition, other aqueous resins can fitly be combined in addition to the above essential components (A), (B), (C) and (D), if necessary. Examples of the above other aqueous resins include aqueous acrylic resins, acrylic emulsions, and amino resin emulsions. Incidentally, there is a case where these aqueous resins are used as the below-mentioned pigment dispersants.

When the occasion demands, the present invention aqueous primer coating composition can further comprise other additives which are conventionally added to coatings. Examples thereof include pigments, surfactants, neutralizers, stabilizers, thickeners, defoamers, surface conditioners, leveling agents, pigment dispersants, ultraviolet absorbents, antioxidants, inorganic fillers (e.g. silica), conductive fillers (e.g., conductive carbon, metal powders, and conductive ceramics), organic reformers, and plasticizers.

Examples of the thickeners mixable into the present invention aqueous primer coating composition include associated nonionic urethane thickeners, alkaline-swollen thickeners, and bentonite as an inorganic intercalation compound.

Examples of the pigments mixable into the present invention aqueous primer coating composition include: color pigments, such as inorganic pigments (e.g. titanium oxide, carbon black, iron oxide, chromium oxide, and Prussian blue) and organic pigments (e.g. azo pigments, anthracene pigments, perylene pigments, quinacridone pigments, indigo pigments, and phthalocyanine pigments); extenders, such as talc and precipitated barium sulfate; conductive pigments, such as conductive carbon and whiskers (as obtained by coating tin oxide as doped with antimony); and uncolored or colored metallic brilliant materials (e.g. metals, such as aluminum, copper, zinc, nickel, tin, and aluminum oxide, or their alloys). These may be used either alone respectively or in combinations with each other.

Examples of the pigment dispersants mixable into the present invention aqueous primer coating composition include: the aqueous acrylic resins; acidic block copolymers, such as BYK-190 produced by Byk Chemie Co., Ltd.; styrene-maleic acid copolymers; acetylenediol derivatives, such as Surfynol GA and Surfynol T324 produced by Air Products Co., Ltd.; water-soluble carboxymethyl cellulose acetate butyrate, such as CMCAB-641-0.5 produced by Eastman Chemical Co., Ltd. Stable pigment pastes can be prepared by using these pigment dispersants.

Examples of the defoamers mixable into the present invention aqueous primer coating composition include Surfynol 104PA and Surfynol 440 produced by Air Products Co., Ltd.

### (Production of aqueous primer coating composition):

The present invention aqueous primer coating composition comprises the acid-anhydride-modified chlorinated polyolefin emulsion resin (A), the aqueous urethane dispersion (B), the aqueous epoxy resin (C), and the organic strong base and/or its salt (D), as explained above in detail, and further comprises other components such as the pigments when the occasion demands. The respective combining ratios of the components are set in the following range in view of the resulting balance between the coating-film properties and the storage stability.

The nonvolatile content of the acid-anhydride-modified chlorinated polyolefin emulsion resin (A) is in the range of 20 to 60 weight %, favorably 30 to 50 weight %, relative to the total nonvolatile content of the acid-anhydride-modified chlorinated polyolefin emulsion resin (A), the aqueous urethane dispersion (B), and the aqueous epoxy resin (C). In the case where the nonvolatile content of the acid-anhydride-modified chlorinated polyolefin emulsion resin (A) is less than 20 weight %, the adhesion to the substrate is deteriorated. On the other hand, in the case where the nonvolatile content of the acid-anhydride-modified chlorinated polyolefin emulsion resin (A) is more than 60 weight %, the adhesion between coating films is deteriorated.

The nonvolatile content of the aqueous urethane dispersion (B) is in the range of 10 to 40 weight %, favorably 15 to 25 weight %, relative to the total nonvolatile content of the acid-anhydride-modified chlorinated polyolefin emulsion resin (A), the aqueous urethane dispersion (B), and the aqueous epoxy resin (C). In the case where the nonvolatile content of the aqueous urethane dispersion (B) is less than 10 weight %, the film formability is not sufficient, and the humidity-resisting adhesion is deteriorated. On the other hand, in the case where the nonvolatile content of the aqueous urethane dispersion (B) is more than 40 weight %, the gasohol resistance is deteriorated.

The nonvolatile content of the aqueous epoxy resin (C) is in the range of 20 to 60 weight %, favorably 30 to 50 weight %, relative to the total nonvolatile content of the acid-anhydride-modified chlorinated polyolefin emulsion resin (A), the aqueous urethane dispersion (B), and the aqueous epoxy resin (C). In the case where the nonvolatile content of the aqueous epoxy resin (C) is less than 20 weight %, the water resistance is deteriorated. On the other hand, in the case where the nonvolatile content of the aqueous epoxy resin (C) is more than 60 weight %, the storage stability is deteriorated.

The ratio of the organic strong base and/or its salt (D) is in the range of 1 to 5 weight %, favorably 1.5 to 3 weight %, relative to the total nonvolatile content of the acid-anhydride-modified chlorinated polyolefin emulsion resin (A), the aqueous urethane dispersion (B), and the aqueous epoxy resin (C). In the case where the ratio of the organic strong base and/or its salt (D) is less than 1 weight %, the gasohol resistance is deteriorated. On the other hand, in the case where the ratio of the organic strong base and/or its salt (D) is more than 5 weight %, the humidity-resisting adhesion is deteriorated.

The present invention aqueous primer coating composition may contain the pigment and the pigment dispersant. The ratio of the pigment is favorably in the range of 3 to 120 weight % relative to the total nonvolatile content of the acid-anhydride-modified chlorinated polyolefin emulsion resin (A), the aqueous urethane dispersion (B), and the aqueous epoxy resin (C). In the case where the ratio of the pigment is less than 3 weight %, there tends to be no hiding ability. On the other hand, in the case where the ratio of the pigment is more than 120 weight %, there tends to be no film formability.

The ratio of the pigment dispersant is favorably in the range of 3 to 20 weight % relative to the total nonvolatile content of the acid-anhydride-modified chlorinated polyolefin emulsion resin (A), the aqueous urethane dispersion (B), and the aqueous epoxy resin (C). In the case where the ratio of the pigment dispersant is less than 3 weight %, there is a tendency such that stable pigment pastes cannot be obtained. On the other hand, in the case where the ratio of the pigment dispersant is more than 20 weight %, the gasohol resistance and the humidity-resisting adhesion tend to be deteriorated.

The pH of the present invention aqueous primer coating composition is favorably in the range of 6.5 to 9.5, more favorably 7.5 to 8.5. In the case where the pH of the aqueous primer coating composition is less than 6.5, the dispersion stability tends to be deteriorated. On the other hand, in the case where the pH of the aqueous primer coating composition is more than 9.5, there is a tendency for the composition to have such a high viscosity as to be difficult to use.

Incidentally, the pH of the aqueous primer coating composition is fitly adjusted by using such as the aforementioned organic strong base.

The present invention aqueous primer coating composition is produced by mixing the (A) to (D) as explained above (and other components as used when the occasion demands). Particularly, in the case of producing the aqueous primer coating composition that contains the pigment, a production process for the aqueous primer coating composition, which involves beforehand preparing a pigment-dispersed paste including the pigment and the pigment dispersant as essential components, is favorable because of its high production efficiency.

### -Process for formation of coating film-

Though not especially limited, examples of the substrate, which is to be coated with the present invention aqueous primer coating composition, include plastic materials such as polyolefins (e.g. polypropylene (PP) and polyethylene (PE)), acrylonitrile-styrene (AS), acrylonitrile-butadiene-styrene (ABS), polyphenylene oxide (PPO), polyvinyl chloride (PVC), polyurethane (PU), and polycarbonate (PC). The plastic materials are favorable as the substrates, and more favorable are the polyolefin materials such as the polypropylene (PP) and the polyethylene (PE).

The present invention process for formation of a coating film is a process comprising the steps of: coating a substrate with the present invention aqueous primer coating composition; and thereafter drying the resultant primer coating film in such a manner that its nonvolatile content will not be less than 60 weight %; and thereafter overcoating the primer coating film with a base paint and a clear paint; and thereafter baking the resultant three-layered coating film onto the substrate. The present invention coated article is, for example, obtained by this process.

There is no especial limitation on the method for coating the substrate with the aqueous primer coating composition, but the coating can be carried out either by air spray coating or by airless spray coating. After the step of coating the substrate with the coating composition, the step of drying the resultant primer coating film is carried out. This drying step may be carried out either by air drying or by forced drying. As to the forced drying, the drying step may be carried out by any of such as warm-wind drying, near-infrared-ray drying, and electromagnetic-wave drying. In the drying step, the nonvolatile content of the resultant primer coating film is adjusted so as not to be less than 60 weight %, favorably so as not to be less than 70 weight %. In the case where the nonvolatile content is less than 60 weight %, the appearance of the coating film is sometimes defective after the base paint and the clear paint are coated and then dried.

The drying temperature is selected in such a range as does not cause the heat deflection of the substrate, and is favorably not higher than 120 °C, more favorably not higher than 90 °C. Incidentally, the drying time usually depends upon the drying temperature and is fitly set in consideration of energy efficiency.

The dried-film thickness of the aqueous primer coating composition is favorably in the range of 2 to 30 µm, more favorably 5 to 20 µm. In the case where the dried-film thickness is less than 2 µm, there is a tendency such that the thickness is too thin to obtain a continuous uniform film. On the other hand, in the case where the dried-film thickness is more than 30 µm, the water resistance and the weather resistance tend to be deteriorated.

Subsequently, the base paint and the clear paint are overcoated onto the resultant primer coating film in order, thereby obtaining the three-layered coating film. There is no especial limitation on the method for coating the base paint and the clear paint, but they can be coated by the same method as of the aqueous primer coating composition.

As to the base paint, a solvent-base one- or two-component-curing type paint including at least one pigment selected from the group consisting of color pigments, brilliant pigments, and mica pigments is favorable in view of the coating-film properties and the coating workability.

Examples of the pigment in the base paint include: color pigments, such as inorganic pigments (e.g. titanium oxide, carbon black, iron oxide, chromium oxide, and Prussian blue) and organic pigments (e.g. azo pigments, anthracene pigments, perylene pigments, quinacridone pigments, indigo pigments, and phthalocyanine pigments); brilliant pigments such as aluminum flakes; and mica pigments. These may be used either alone respectively or in combinations with each other.

Examples of the base paint on the market include: two-component-curing type urethane paints such as R784XHS-1 (produced by Morton Nippon Coatings Co., Ltd.); and one-component -curing type urethane paints including a curing agent that is a blocked isocyanate, such as R301 (produced by Nippon Bee Chemical Co., Ltd.).

If the clear paint is a two-component clear paint (e.g. two-component-curing type urethane paint) including a curing agent that is an isocyanate, there are advantages in that the coating film as obtained has good appearance and is excellent in the acid resistance.

Examples of the isocyanate used as the curing agent include: non-yellowing-type compounds having at least two isocyanate groups per molecule (e.g. adducts, isocyanurates, and biurets of such as hexamethylene diisocyanate and isophorone diisocyanate). Examples of the curing agent on the market include: Desmodur 3600 and Sumidur 3300 produced by Sumitomo Bayer Co., Ltd.; Colonate HX produced by Nippon Polyurethane Co., Ltd.; Takenate D-140NL and D-170N produced by Mitsui Takeda Chemical Co., Ltd.; and Duranate 24A-90PX and THA-100 produced by Asahi Kasei Corporation.

Examples of the clear paint on the market include: two-component-curing type urethane paints such as: R788-1 (produced by Morton Nippon Coatings Co., Ltd.); and R288 and R291 (produced by Nippon Bee Chemical Co., Ltd.).

Though there is no especial limitation on the method for baking the above-obtained three-layered coating film onto the aforementioned substrate, yet the baking temperature is favorably in the range of 80 to 120 °C, more favorably 80 to 100 °C. In the case where the baking temperature is lower than 80 °C, there is a possibility that the baking may be imperfect, therefore, in the case where a coating film having tackinees has been formed, there is a tendency such that the treatment of the subsequent step cannot be carried out soon. On the other hand, in the case where the baking temperature is higher than 120 °C, the substrate tends to be deformed.

The baking time usually depends upon the baking temperature and is fitly set in consideration of energy efficiency, but it is favorably in the range of 15 to 60 minutes, more favorably 20 to 30 minutes. In the case where the baking time is less than 15 minutes, the baking tends to be imperfect, though depending upon the baking temperature. On the other hand, the baking time is more than 60 minutes, the working efficiency tends to lower.

### (Effects and Advantages of the Invention):

The present invention aqueous primer coating composition can form the coating film excellent in the humidity-resisting adhesion and the gasohol resistance, and can enhance the productivity in the coating steps.

The present invention process for formation of a coating film enables the formation, with high productivity, of the coating film excellent in the coating-film properties such as the humidity-resisting adhesion and the gasohol resistance even if the baking treatment of the three-layered coating film as obtained by overcoating the aqueous primer coating composition, the base paint, and the clear paint is carried out at the same time.

As to the present invention coated article, its coating film is excellent in the humidity-resisting adhesion and the gasohol resistance, because this coated article is obtained by the present invention process for formation of a coating film.

### DETAILED DESCRIPTION OF THE PREFERRED EMBODIMENTS

Hereinafter, the present invention is more specifically illustrated by the following examples of some preferred embodiments in comparison with comparative examples not according to the invention. However, the present invention is not limited to these examples. Incidentally, hereinafter, unless otherwise noted, the unit "part(s)" denotes "part(s) by weight".

The following production examples were carried out and each component of the aqueous primer composition was obtained.

### [Production Example 1 of maleic-anhydride-modified chlorinated polypropylene emulsion resin]:

A reaction apparatus, as equipped with a stirring blade, a thermometer, a temperature-controlling rod, and a condenser, was charged with 240 parts of Hardren M128P (maleic-anhydride-modified chlorinated polypropylene produced by Toyo Kasei Kogyo Co., Ltd., chlorine content: 21 weight %, and weight-average molecular weight: 40,000), 60 parts of Emulgen 920 (nonyl phenyl polyoxyethylene ether produced by Kao Corporation), 64 parts of Solveso-100 (aromatic hydrocarbon produced by Exxon Corporation), and 27 parts of Carbitol acetate (diethylene glycol monoethyl ether acetate), and then the resultant mixture was heated and dissolved at 110 °C for 1 hour. Thereafter, the mixture was cooled to not higher than 100 °C, and then a solution of 9 parts of 1,8-diazabicyclo[5.4.0]undecene-7 (hereinafter, referred to as DBU) in 600 parts of deionized water was added dropwise thereto in 1 hour, thereby carrying out reversed-phase emulsification. After the resultant emulsion mixture was cooled, it was filtrated with a wire net of 400 mesh, thus obtaining a maleic-anhydride-modified chlorinated polypropylene emulsion resin (emulsion resin (1)).

This emulsion resin (1) had a nonvolatile content of 29.5 weight % and an average particle diameter of 0.08 µm (as measured by a laser light scattering method).

### [Production Example 2 of maleic-anhydride-modified chlorinated polypropylene emulsion resin]:

A maleic-anhydride-modified chlorinated polypropylene emulsion resin (emulsion resin (2)) was obtained in the same way as of Production Example 1 except to use dimethylethanolamine (hereinafter, referred to as DMEA, and pKa = 9.11 (measured by its maker)) instead of the DBU.

This emulsion resin (2) had a nonvolatile content of 29.5 weight % and an average particle diameter of 0.1 µm (as measured by a laser light scattering method).

### [Production Example 1 of pigment-dispersed paste]:

To a container equipped with a stirrer, there were added 555 parts of EPI-REZ 6006W70 (epoxy emulsion produced by Japan Epoxy Resin Co., Ltd., and nonvolatile content: 70 weight %), 174 parts of Surfynol GA (pigment dispersant produced by Air Products Co., Ltd.), 133 parts of Surfynol 104PA (defoamer produced by Air Products Co., Ltd.), 2,330 parts of deionized water, 60 parts of carbon black ECP600JD (conductive carbon produced by Lion Corporation), 682 parts of Typure R960 (titanium-oxide pigment produced by E.I. du Pont de Nemours and Company), and 60 parts of Nipseal SS50B (silica produced by Nippon Silica Co., Ltd.) in order under stirred conditions, and then the resultant mixture was stirred for 1 hour. Thereafter, the mixture was dispersed with a laboratory DYNO-MILL of 1.4 liters until its grind gauge showed not more than 20 µm, thus obtaining a pigment-dispersed paste (1).

This pigment-dispersed paste (1) had a nonvolatile content of 34 weight % and a viscosity of 62 KU (20 °C).

### [Production Example 2 of pigment-dispersed paste]:

To a container equipped with a stirrer, there were added 340 parts of aqueous acrylic resin (nonvolatile acid value: 50 mgKOH/g, weight-average molecular weight: 30,000, and nonvolatile content: 30 weight %), 90 parts of Surfynol GA (pigment dispersant produced by Air Products Co., Ltd.), 69 parts of Surfynol 104PA (defoamer produced by Air Products Co., Ltd.), 1,960 parts of deionized water, 130 parts of carbon black ECP600JD (conductive carbon produced by Lion Corporation), 1,280 parts of Typure R960 (titanium-oxide pigment produced by E.I. du Pont de Nemours and Company), and 130 parts of Nipseal SS50B (silica produced by Nippon Silica Co., Ltd.) in order under stirred conditions, and then the resultant mixture was stirred for 1 hour. Thereafter, the mixture was dispersed with a laboratory DYNO-MILL of 1.4 liters until its grind gauge showed not more than 20 µm, thus obtaining a pigment-dispersed paste (2).

This pigment-dispersed paste (2) had a nonvolatile content of 43 weight % and a viscosity of 60 KU (20 °C).

Hereinafter, the following examples were carried out, and then the test and the evaluation were performed. The methods for the test and the evaluation are as follows.

### (Method for evaluation of appearance of initial coating film with eye):

The coating film as obtained was evaluated with the eye to comparatively evaluate such as: flattening of the clear paint; and color unevenness and a metallic-colored aluminum feeling of the base paint; on the standard such that the dried primer coating film as formed under conditions of 80 °C × 10 minutes was described as O.

In the case where the evaluation result was the same as the above, the result was described as ○. In the case where the evaluation result was abnormal, the result was described as ×.

### (Checkerboard squares peeling test):

In accordance with JIS K5400, the checkerboard squares peeling test with Sellotape (Scotch tape) (registered trade mark) was carried out upon the test piece as obtained. One hundred checkerboard squares of 2 mm × 2 mm were prepared, and the peeling test with Sellotape (Scotch tape) (registered trade mark) was carried out, and then the number of checkerboard squares as not peeled off was counted. The evaluation standard is as follows.
○: 0/100 (no peeling)
Δ: 1/100 to 50/100 (peeling by not more than 50 %)
× : 51/100 to 100/100 (peeling by not less than 51 %)

### (Humidity-resisting adhesion test and evaluation of appearance):

The test piece as obtained below was left under an atmosphere of 50 °C and 95 % in humidity for 10 days, and thereafter the above checkerboard squares peeling test and evaluation of appearance were carried out.

The evaluation standard of the evaluation of appearance is as follows:
○: A case where there is no abnormality in comparison with the initial stage (before the humidity-resisting adhesion test).
× : A case where there is blistering or flattening in the coating film in comparison with the initial stage (before the humidity-resisting adhesion test).

### (Gasohol resistance test):

The test piece as obtained below was immersed into gasohol as obtained by adding ethanol to regular gasoline in an amount of 10 volume %, and thereafter the peelability was evaluated by measuring how long time passed until the peeling of the coating film reached 2 mm of the edge portion. In the case where the aforementioned time was more than 60 minutes, the result was described as ⊚. In the case where that was in the range of 60 to 30 minutes, the result was described as ○. In the case where that was less than 30 minutes, the result was described as ×.

### <Example 1>:

A container, as equipped with a stirrer, was charged with 597 parts of the pigment-dispersed paste (1), and then 73 parts of deionized water was added thereto under stirred conditions. Subsequently added thereto in order under stirred conditions were 97 parts of Superflex-150 (aqueous urethane dispersion produced by Dai-ichi Kogyo Seiyaku Co., Ltd., and nonvolatile content: 30 weight %), 193 parts of the emulsion resin (1), 8 parts of Dynol 604 (additive (leveling agent) produced by Air Products Co., Ltd.), 9 parts of Primal ASE60 (thickener produced by Rohm and Haas Company), and 22 parts of 5 weight % aqueous DBU solution. Then, the resultant mixture was stirred for 1 hour.

An aqueous primer coating composition (1) as obtained in this way had a nonvolatile content of 30 weight % and a viscosity of 60 KU (20 °C). These results are listed in Table 1.

In the obtained aqueous primer coating composition (1), its components' weight percentages relative to the total nonvolatile content of the emulsion resin (1) (emulsion resin (A)), the Superflex-150 (aqueous urethane dispersion (B)), and the EPI-REZ 6006W70 (aqueous epoxy emulsion (C)) were as follows: the nonvolatile content of the emulsion resin (1) was 40 weight %, that of the Superflex-150 was 20 weight %, and that of the EPI-REZ 6006W70 was 40 weight %, and further, the combining ratio of the DBU (organic strong base and/or its salt (D)) was 2 weight %.

The aqueous primer coating composition (1) as obtained was coated onto two polypropylene materials with a spray (dried-film thickness: 10 µm) wherein the polypropylene materials had beforehand been washed with a neutral detergent. One of the polypropylene materials was dried at 40 °C for 3 minutes, and the other polypropylene material was dried at 80 °C for 10 minutes. After the cooling, the nonvolatile contents of the primer coating films as obtained were 75 weight % and 95 weight % respectively. Next, a solvent-base two-component metallic base paint (784XHS-1 produced by Morton Nippon Coatings Co., Ltd.) and subsequently a solvent-base two-component clear paint (R788-1 produced by Morton Nippon Coatings Co., Ltd.) were overcoated onto the primer coating film by spray coating in such a manner that the dried-film thickness would be 15 µm and 30 µm respectively. At the end, the baking treatment of the resultant three-layered coating film was carried out at 80 °C for 30 minutes, thus preparing two test pieces.

As to the test pieces as obtained, the checkerboard squares peeling test was carried out, thereby evaluating the adhesion. In addition, the humidity-resisting adhesion test and its evaluation of appearance were carried out, thereby evaluating the humidity-resisting adhesion. Furthermore, the gasohol resistance test was also carried out, thereby evaluating the gasohol resistance. These results are listed in Table 1.

### <Example 2>:

A container, as equipped with a stirrer, was charged with 312 parts of the pigment-dispersed paste (2). Subsequently added thereto were 120 parts of diluted liquid of EPI-REZ 6006W70 (epoxy resin emulsion produced by Japan Epoxy Resin Co., Ltd.) (as obtained by adding thereto deionized water, thereby adjusting its nonvolatile content to 50 weight %), 100 parts of Superflex-150 (aqueous urethane dispersion produced by Dai-ichi Kogyo Seiyaku Co., Ltd., and nonvolatile content: 30 weight %), 200 parts of the emulsion resin (1), 220 parts of deionized water, and 9 parts of Dynol 604 (additive (leveling agent) produced by Air Products Co., Ltd.). Furthermore, 12 parts of Primal ASE60 (thickener produced by Rohm and Haas Company) and 24 parts of 5 weight % aqueous DBU solution were added thereto in order under stirred conditions, and then the resultant mixture was stirred for 1 hour.

An aqueous primer coating composition (2) as obtained in this way had a nonvolatile content of 30 weight % and a viscosity of 60 KU (20 °C). These results are listed in Table 1.

In the obtained aqueous primer coating composition (2), its components' weight percentages relative to the total nonvolatile content of the emulsion resin (1) (emulsion resin (A)), the Superflex-150 (aqueous urethane dispersion (B)), and the EPI-REZ 6006W70 (aqueous epoxy emulsion (C)) were as follows: the nonvolatile content of the emulsion resin (1) was 40 weight %, that of the Superflex-150 was 20 weight %, and that of the EPI-REZ 6006W70 was 40 weight %, and further, the combining ratio of the DBU (organic strong base and/or its salt (D)) was 2 weight %.

Two test pieces were prepared by the same method as of Example 1 except to substitute the aqueous primer coating composition (2) as obtained. Incidentally, as to primer coating films as obtained by coating and then drying the aqueous primer coating composition (2), their nonvolatile contents were 70 weight % and 96 weight % respectively.

The properties of the two test pieces as obtained were evaluated in the same way as of Example 1. The results are listed in Table 1.

### <Comparative Example 1>:

A comparative aqueous primer coating composition (1) was produced by the same method as of Example 1 except that: the emulsion resin (2) was used instead of the emulsion resin (1), and 24 parts of 5 weight % aqueous DMEA solution was added instead of the 22 parts of 5 weight % aqueous DBU solution.

The comparative aqueous primer coating composition (1) as obtained in this way had a nonvolatile content of 30 weight % and a viscosity of 60 KU (20 °C). These results are listed in Table 2.

From the obtained comparative aqueous primer coating composition (1), there was excluded any component corresponding to the organic strong base and/or its salt (D).

Two test pieces were prepared and evaluated by the same method as of Example 1 except to substitute the comparative aqueous primer coating composition (1) as obtained. The results are listed in Table 2.

### <Example 3>:

An aqueous primer coating composition (3) was produced by the same method as of Example 2 except that 24 parts of 5 weight % aqueous tetrabutylammonium hydroxide solution was added instead of the 24 parts of 5 weight % aqueous DBU solution.

The aqueous primer coating composition (3) as obtained in this way had a nonvolatile content of 30 weight % and a viscosity of 60 KU (20 °C). These results are listed in Table 1.

In the obtained aqueous primer coating composition (3), its components' weight percentages relative to the total nonvolatile content of the emulsion resin (1) (emulsion resin (A)), the Superflex-150 (aqueous urethane dispersion (B)), and the EPI-REZ 6006W70 (aqueous epoxy emulsion (C)) were as follows: the nonvolatile content of the emulsion resin (1) was 40 weight %, that of the Superflex-150 was 20 weight %, and that of the EPI-REZ 6006W70 was 40 weight %, and further, the total combining ratio of the tetrabutylammonium hydroxide and DBU (organic strong base and/or its salt (D)) was 2 weight % (the combining ratio of the tetrabutylammonium hydroxide was 0.8 weight %, and the combining ratio of the DBU was 1.2 weight %).

Two test pieces were prepared and evaluated by the same method as of Example 1 except to substitute the aqueous primer coating composition (3) as obtained. The results are listed in Table 1.

### <Example 4>:

An aqueous primer coating composition (4) was produced by adding 0.6 part of phenolate salt of DBU (UCAT-SA1 produced by Sun Apro Co., Ltd.) to 100 parts of the comparative aqueous primer coating composition (1) as obtained in Comparative Example 1.

The aqueous primer coating composition (4) as obtained in this way had a nonvolatile content of 30 weight % and a viscosity of 60 KU (20 °C). These results are listed in Table 1.

In the obtained aqueous primer coating composition (4), its components' weight percentages relative to the total nonvolatile content of the emulsion resin (2) (emulsion resin (A)), the Superflex-150 (aqueous urethane dispersion (B)), and the EPI-REZ 6006W70 (aqueous epoxy emulsion (C)) were as follows: the nonvolatile content of the emulsion resin (2) was 40 weight %, that of the Superflex-150 was 20 weight %, and that of the EPI-REZ 6006W70 was 40 weight %, and further, the combining ratio of the phenolate salt of DBU (organic strong base and/or its salt (D)) was 4.2 weight %.

Two test pieces were prepared and evaluated by the same method as of Example 1 except to substitute the aqueous primer coating composition (4) as obtained. The results are listed in Table 1.

**Table 1**

| | Example | | | | | | | |
|---|---|---|---|---|---|---|---|---|
| | 1 | | 2 | | 3 | | 4 | |
| Organic strong base and/or | DBU | | DBU | | Tetrabutylammonium | | Phenolate salt of DBU | |
| its salt | (2) | | (2) | | hydroxide and DBU | | (42) | |
| (combining ratio *1) | | | | | (0.8 and 1.2) | | | |
| Nonvolatile content of paint (weight %) | 30 | | 30 | | 30 | | 30 | |
| Viscosity of paint *2 | 60KU | | 60KU | | 60KU | | 60KU | |
| Drying conditions of aqueous primer | 40°C | 80°C | 40°C | 80°C | 40°C | 80°C | 40°C | 80°C |
| | × | × | × | × | × | × | × | × |
| | 3 minutes | 10 minutes | 3 minutes | 10 minutes | 3 minutes | 10 minutes | 3 minutes | 10 minutes |
| Nonvolatile content of primer coating film after drying (weight %) | 75 | 95 | 70 | 96 | 68 | 95 | 73 | 94 |
| Evaluation of appearance of initial coating film with eye | ○ | ○ | ○ | ○ | ○ | ○ | ○ | ○ |
| Checkerboard squares peeling test | ○ | ○ | ○ | ○ | ○ | ○ | ○ | ○ |
| Humidity-resisting adhesion test | ○ | ○ | ○ | ○ | ○ | ○ | ○ | ○ |
| Evaluation of appearance in humidity-reslsfing adhesion test | ○ | ○ | ○ | ○ | ○ | ○ | ○ | ○ |
| Gasohol resistance | ⊚ | ⊚ | ⊚ | ⊚ | ⊚ | ⊚ | ⊚ | ⊚ |

| | | | | | | | | |
|---|---|---|---|---|---|---|---|---|
| *1: Weight % relative to the total nonvolatile content of the acid-anhydride-modified chlorinated polyolefin emulsion resin (A), the aqueous methane dispersion (B), and the aqueous epoxy resin (C). *2: Value measured with Stomer viscometer (20 °C) | | | | | | | | |

### <Comparative Example 2>:

A comparative aqueous primer coating composition (2) was produced by the same method as of Comparative Example 1 except that 14 parts of 5 weight % aqueous DBU solution and 10 parts of 5 weight % aqueous DMEA solution were added instead of the 24 parts of 5 weight % aqueous DMEA solution.

The comparative aqueous primer coating composition (2) as obtained in this way had a nonvolatile content of 30 weight % and a viscosity of 60 KU (20 °C). These results are listed in Table 2.

In the obtained comparative aqueous primer coating composition (2), its components' weight percentages relative to the total nonvolatile content of the emulsion resin (2) (emulsion resin (A)), the Superflex-150 (aqueous urethane dispersion (B)), and the EPI-REZ 6006W70 (aqueous epoxy emulsion (C)) were as follows: the nonvolatile content of the emulsion resin (2) was 40 weight %, that of the Superflex-150 was 20 weight %, and that of the EPI-REZ 6006W70 was 40 weight %, and further, the combining ratio of the DBU (organic strong base and/or its salt (D)) was 0.5 weight %.

Two test pieces were prepared and evaluated by the same method as of Example 1 except to substitute the comparative aqueous primer coating composition (2) as obtained. The results are listed in Table 2.

### <Comparative Example 3>:

A comparative aqueous primer coating composition (3) was produced by adding 1.1 parts of phenolate salt of DBU (UCAT-SA1 produced by Sun Apro Co., Ltd.) to 100 parts of the aqueous primer coating composition (2) as obtained in Example 2.

The comparative aqueous primer coating composition (3) as obtained in this way had a nonvolatile content of 30 weight % and a viscosity of 60 KU (20 °C). These results are listed in Table 2.

In the obtained comparative aqueous primer coating composition (3), its components' weight percentages relative to the total nonvolatile content of the emulsion resin (1) (emulsion resin (A)), the Superflex-150 (aqueous urethane dispersion (B)), and the EPI-REZ 6006W70 (aqueous epoxy emulsion (C)) were as follows: the nonvolatile content of the emulsion resin (1) was 40 weight %, that of the Superflex-150 was 20 weight %, and that of the EPI-REZ 6006W70 was 40 weight %, and further, the total combining ratio of the DBU and its phenolate salt (organic strong base and/or its salt (D)) was 8.1 weight % (the combining ratio of the DBU was 0.7 weight %, and the combining ratio of its phenolate salt was 7.4 weight %).

Two test pieces were prepared and evaluated by the same method as of Example 1 except to substitute the comparative aqueous primer coating composition (3) as obtained. The results are listed in Table 2.

### <Comparative Example 4>:

The aqueous primer coating composition (1) as obtained in Example 1 was coated onto two polypropylene materials with a spray (dried-film thickness: 10 µm) wherein the polypropylene materials had beforehand been washed with a neutral detergent. One of the polypropylene materials was dried at room temperature for 5 minutes, and the other polypropylene material was dried at 40 °C for 1 minute.

The nonvolatile contents of the primer coating films as obtained in this way were 45 weight % and 55 weight % respectively.

Subsequently, in the same way as of Example 1, the solvent-base two-component metallic base paint and the solvent-base two-component clear paint were coated thereonto by the spray, and then the baking treatment was carried out to prepare two test pieces, which were then evaluated. The evaluation results are listed in Table 2.

**Table 2**

| | Comparative Example | | | | | | | |
|---|---|---|---|---|---|---|---|---|
| | 1 | | 2 | | 3 | | 4 | |
| Organic strong base and/or | - | | DBU | | DBU and its phenolate salt | | DBU | |
| its salt | (0) | | (0.5) | | (0.7 and 7.4) | | (2) | |
| (combining ratio *1) | | | | | | | | |
| Nonvolatile content of paint (weight %) | 30 | | 30 | | 30 | | 30 | |
| Viscosity of paint *2 | 60KU | | 60KU | | 60KU | | 60KU | |
| Drying conditions of | 40°C | 80°C | 40°C | 80°C | 40°C | 80°C | Room | 40°C |
| aqueous primer | × | × | × | × | × | × | temperature | × |
| | 3 minutes | 10 minutes | 3 minutes | 10 minutes | 3 minutes | 10 minutes | x 5 minutes | 1 minute |
| Nonvolatile content of primer coating film after drying (weight %) | 75 | 94 | 70 | 95 | 75 | 94 | 45 | 55 |
| Evaluation of appearance of initial coating film with eye | ○ | ○ | ○ | ○ | ○ | ○ | × | × |
| Checkerboard squares peeling test | ○ | ○ | ○ | ○ | ○ | ○ | ○ | ○ |
| Humidity-tesisting adhesion test | Δ | ○ | Δ | ○ | Δ | Δ | Δ | ○ |
| Evaluation of appearance in humidity-resisting adhesion test | × | ○ | × | ○ | × | × | × | × |
| Gasohol resistance | × | ○ | × | ○ | ⊚ | ⊚ | ○ | ⊚ |

| | | | | | | | | |
|---|---|---|---|---|---|---|---|---|
| *1: Weight % relative to the total nonvolatile content of the acid-anhydride-modified chlorinated polyolefin emulsion resin (A), the aqueous urethane dispersion (B), and the aqueous epoxy resin (C). *2: Value measured with Stomer viscometer (20 °C) | | | | | | | | |

Various details of the invention may be changed without departing from its spirit not its scope. Furthermore, the foregoing description of the preferred embodiments according to the present invention is provided for the purpose of illustration only, and not for the purpose of limiting the invention as defined by the appended claims and their equivalents.

## Claims

1. An aqueous primer coating composition, which comprises an acid-anhydride-modified chlorinated polyolefin emulsion resin (A), an aqueous urethane dispersion (B), an aqueous epoxy resin (C), and an organic strong base and/or its salt (D); wherein, relative to the total nonvolatile content of the (A), (B), and (C), the nonvolatile content of the (A) is in the range of 20 to 60 weight%, that of the (B) is in the range of 10 to 40 weight%, and that of the (C) is in the range of 20 to 60 weight%, and further, the (D) is in the range of 1 to 5 weight%, **characterized in that** the organic strong base is at least one member selected from the group consisting of 1,8-diazabicyclo[5.4.0]undecene-7 (DBU) and 1,5-diazabicyclo[4.3.0]nonene-5 (DBN).

2. A process for formation of a coating film, which comprises the steps of: coating a substrate with the aqueous primer coating composition as recited in claim 1; and thereafter drying the resultant primer coating film in such a manner that its nonvolatile content will not be less than 60 weight %; and thereafter overcoating the primer coating film with a base paint and a clear paint; and thereafter baking the resultant three-layered coating film onto the substrate.

3. A process according to claim 2, wherein the substrate includes a plastic material.

4. A process according to claim 2 or 3, wherein the base paint is a solvent-base one- or two-component-curing type paint including at least one pigment selected from the group consisting of color pigments, brilliant pigments, and mica pigments, and wherein the clear paint is a two-component clear paint including a curing agent that is an isocyanate.

5. A coated article, which is obtained by coating the substrate by the process as recited in any one of claims 2 to 4.

6. A coated article according to claim 5, wherein the substrate includes a plastic material.

## Patentansprüche

1. Wässrige Grundierungsbeschichtungszusammensetzung, die eine Harzemulsion eines säureanhydridmodifizierten chlorierten Polyolefins (A), eine wässrige Urethandispersion (B), ein wässriges Epoxyharz (C) und eine organische starke Base und/oder deren Salz (D) umfasst, wobei - bezogen auf den Gesamtgehalt von (A), (B) und (C) an nichtflüchtigen Stoffen - der Gehalt von (A) an nichtflüchtigen Stoffen im Bereich von 20 bis 60 Gew.-% liegt, der von (B) im Bereich von 10 bis 40 Gew.-% liegt und der von (C) im Bereich von 20 bis 60 Gew.-% liegt und ferner (D) im Bereich von 1 bis 5 Gew.-% liegt; wobei die wässrige Grundierungsbeschichtungszusammensetzung **dadurch gekennzeichnet ist, dass** die organische starke Base mindestens eine Komponente ist, die aus der Gruppe von 1,8-Diazabicyclo[5.4.0]undecen-7 (DBU) und 1,5-Diazabicyclo[4.3.0]nonen-5 (DBN) ausgewählt ist.

2. Verfahren zur Bildung eines Beschichtungsfilms, das die Stufen des Beschichtens eines Substrats mit der wässrigen Grundierungsbeschichtungszusammensetzung nach den Angaben in Anspruch 1 und des darauf folgenden Trocknens des erhaltenen Grundierungsbeschichtungsfilms derart, dass dessen Gehalt an nichtflüchtigen Stoffen nicht weniger als 60 Gew.-% beträgt, und des darauf folgenden Überschichtens des Grundierungsbeschichtungsfilms mit einem Grundlack und einem Klarlack und des darauf folgenden Aufbrennens des erhaltenen dreilagigen Beschichtungsfilms auf das Substrat umfasst.

3. Verfahren nach Anspruch 2, wobei das Substrat ein Kunststoffmaterial umfasst.

4. Verfahren nach Anspruch 2 oder 3, wobei der Grundlack ein Lack des Einkomponenten- oder Zweikomponentenhärtungstyps auf Lösemittelbasis, der mindestens ein aus der Gruppe von Farbpigmenten, Glanzpigmenten und Perlglanzpigmenten ausgewähltes Pigment umfasst, ist und wobei der Klarlack ein Zweikomponentenklarlack ist, der ein Härtungsmittel, das ein Isocyanat ist, umfasst.

5. Beschichteter Gegenstand, der durch Beschichten des Substrats durch das in einem der Ansprüche 2 bis 4 angegebene Verfahren erhalten wird.

6. Beschichteter Gegenstand nach Anspruch 5, wobei das Substrat ein Kunststoffmaterial umfasst.

## Revendications

1. Composition aqueuse de revêtement primaire, qui comprend une résine d'émulsion de polyoléfine chlorée modifiée par un anhydride d'acide (A), une dispersion d'uréthane aqueuse (B), une résine époxy aqueuse (C) et une base forte organique et/ou son sel (D) ; dans laquelle, par rapport à la teneur en substances non volatiles totale de (A), (B) et (C), la teneur en substances non volatiles de (A) est dans la gamme de 20 à 60 % en poids, celle de (B) est dans la gamme de 10 à 40 % en poids et celle de (C) est dans la gamme de 20 à 60 % en poids et, en outre, celle de (D) est dans la gamme de 1 à 5 % en poids, **caractérisée en ce que** la base forte organique est au moins un élément choisi dans le groupe constitué par le 1,8-diazabicyclo-[5.4.0]undécène-7 (DBU) et le 1,5-diazabicyclo[4.3.0]-nonène-5 (DBN).

2. Procédé pour former un film de revêtement, qui comprend les étapes consistant : à revêtir un substrat avec la composition aqueuse de revêtement primaire selon la revendication 1 ; et ensuite à sécher le film de revêtement primaire résultant de telle manière que sa teneur en substances non volatiles ne vas pas être inférieure à 60 % en poids ; puis à appliquer sur le film de revêtement primaire une peinture de base et une peinture transparente ; et ensuite à cuire le film de revêtement à trois couches obtenu sur le substrat.

3. Procédé selon la revendication 2, dans lequel le substrat inclut une matière plastique.

4. Procédé selon la revendication 2 ou 3, dans lequel la peinture de base est une peinture à base de solvant de type durcissement par un ou deux constituants incluant au moins un pigment choisi dans le groupe constitué par les pigments de couleur, les pigments brillants et les pigments de type mica, et dans lequel la peinture transparente est une peinture transparente à deux constituants incluant un agent de durcissement qui est un isocyanate.

5. Article revêtu, qui est obtenu en revêtant le substrat par le procédé décrit dans l'une quelconque des revendications 2 à 4.

6. Article revêtu selon la revendication 5, dans lequel le substrat inclut une matière plastique.
